# FASCICULE DE BREVET EUROPEEN

(11) **EP 3 689 435 B1**
(45) Date de publication et mention de la délivrance du brevet: **06.10.2021**
(21) Numéro de dépôt: 20154641.3
(22) Date de dépôt: 30.01.2020
(51) Int. Cl.: B01D 29/15, B01D 35/147, B01D 36/00, F16K 11/085, F16K 11/087

(54) **FILTRE POUR PRODUIT LIQUIDE OU VISQUEUX ET INSTALLATION DE PULVÉRISATION COMPRENANT UN TEL FILTRE**
FILTER FÜR FLÜSSIGES ODER VISKOSES PRODUKT, UND SPRÜHANLAGE, DIE EINEN SOLCHEN FILTER UMFASST
FILTER FOR A LIQUID OR VISCOUS PRODUCT AND SPRAYING FACILITY COMPRISING SUCH A FILTER

(30) Priorité: 31.01.2019 FR 1900962
(43) Date de publication de la demande: 05.08.2020
(73) Titulaire: Exel Industries, 51200 Epernay (FR)
(72) Inventeur: BATLLO, Benoît, 75009 PARIS (FR)
(74) Mandataire: Lavoix

(56) Documents cités:
- FR-A1- 2 472 707
- US-A- 5 152 321
- US-A- 5 931 196
- US-A1- 2012 031 821

## Description

La présente invention concerne un filtre pour produit liquide ou visqueux. Ce filtre comprend un élément filtrant et un godet définissant un volume de réception accueillant l'élément filtrant, ainsi qu'une tubulure d'admission et une tubulure d'évacuation de produit liquide ou visqueux.

Dans le domaine des installations comportant des circuits de distribution de produits liquide ou visqueux comprenant des filtres, un circuit de dérivation peut être mis en place afin d'assurer la continuité de service d'une installation lors d'un changement d'élément de filtrant. Plusieurs méthodes de changement d'élément filtrant sont connues ; chaque méthode comporte des avantages et des inconvénients. Les inconvénients majeurs sont notamment le prix élevé, par exemple dans le cas d'un circuit de dérivation utilisant deux corps de filtre et quatre vannes, ou le risque de pollution, par exemple dans le cas d'un circuit de dérivation sans corps de filtre, utilisant un simple tuyau où le produit liquide ou visqueux peut se détériorer entre deux utilisations.

Il est connu de US-A-2012031821 de réaliser un filtre pour produit liquide qui comprend une vanne configurée pour prendre deux positions. Dans la première position, la vanne relie une tubulure d'admission à un volume de réception d'un élément filtrant et ce volume de réception à une tubulure d'évacuation. Dans la deuxième position, la vanne relie entre elles les tubulures d'admission et d'évacuation et isole le volume de réception par rapport à ces tubulures. Ce filtre est complexe à réaliser et comporte de nombreuses zones de rétention de liquide.

Les documents US5931196 A et US5152321 A divulguent une vanne de dérivation pour un adoucisseur d'eau.

C'est à ces problèmes qu'entend plus particulièrement remédier l'invention, en proposant un nouveau filtre plus économique et plus simple à manipuler.

A cet effet, l'invention concerne un filtre du type précité selon la revendication 1.

Grâce à l'invention, le changement d'élément filtrant est simple et économique. Le filtre fait intervenir un nombre de pièces limité, ce qui facilite les manipulations de changement d'élément filtrant en plus d'être avantageux économiquement. La vanne est en mesure de basculer d'une position à l'autre, modifiant ainsi le trajet parcouru par le produit liquide ou visqueux. Le produit liquide ou visqueux est filtré par l'élément filtrant à l'intérieur du godet lorsque la vanne est dans sa première position. La deuxième position de la vanne sert à créer un circuit de dérivation, couramment appelé « by-pass », permettant d'isoler le volume de réception vis-à-vis des tubulures, sans créer des zones de rétention trop nombreuses ou trop volumineuses, ce qui permet de démonter le godet et d'accéder à l'élément filtrant pour procéder à son remplacement, sans arrêter l'installation. La continuité de service est ainsi assurée.

Selon des aspects avantageux mais non obligatoires de l'invention, un tel filtre peut incorporer une ou plusieurs des caractéristiques suivantes, prises selon toute combinaison techniquement admissible :
- Le filtre comprend au moins un orifice d'entrée d'air et un orifice de purge.
- Au moins un boisseau sphérique comporte une rainure pour mettre en communication le volume de réception avec l'un orifice d'entrée d'air lorsque la vanne est dans sa deuxième position.
- Le filtre comprend un organe de commande manuelle de la position de la vanne.
- La vanne est mobile entre sa première position et sa deuxième position, et réciproquement, par une rotation, dont l'amplitude est de préférence égale à 90°, autour d'un axe de pivotement défini par un corps de la vanne.
- La vanne est intégrée dans une tête montée de façon amovible sur le godet.
- L'élément filtrant est une cartouche de forme cylindrique montée de façon amovible sur la tête.

L'invention a également pour objet une installation de pulvérisation comprenant un réservoir de produit liquide ou visqueux, une pompe et un pulvérisateur, ainsi qu'un filtre pour produit liquide ou visqueux tel que décrit précédemment.

L'invention sera mieux comprise et d'autres avantages de celle-ci apparaîtront plus clairement à la lumière de la description qui va suivre, d'un mode de réalisation d'un filtre et d'une installation de pulvérisation conformes à son principe, donnée uniquement à titre d'exemple et faite en référence aux dessins annexés dans lesquels :
[Fig 1] la figure 1 est un schéma représentant un exemple d'installation dans un circuit de circulation de peinture connu sous le nom de « circulating » de peinture qui alimente au moins un poste de pulvérisation pour produit liquide conforme à l'invention ;
[Fig 2] la figure 2 est une vue en perspective d'un filtre de l'installation de la figure 1, une vanne de ce filtre étant dans une première position ;
[Fig 3] la figure 3 est une coupe du filtre à plus grande échelle, suivant le plan III de la figure 2 ;
[Fig 4] la figure 4 est une coupe du filtre à la même échelle que la figure 3, suivant le plan IV de la figure 2;
[Fig 5] la figure 5 est une coupe d'une partie supérieure du filtre suivant le plan V de la figure 2;
[Fig 6] la figure 6 est une coupe du filtre analogue à la figure 3, également suivant le plan III, lorsque la vanne est dans une deuxième position ;
[Fig 7] la figure 7 est une coupe du filtre analogue à la figure 4, également suivant le plan IV, lorsque la vanne est dans la deuxième position ; et
[Fig 8] la figure 8 est une coupe partielle du filtre analogue à la figure 5, également suivant le plan V, lorsque la vanne est dans la deuxième position.

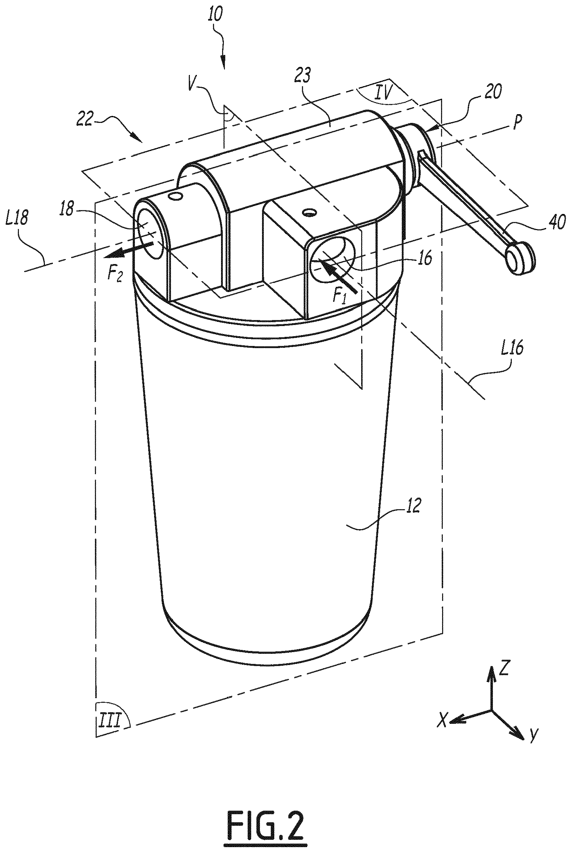

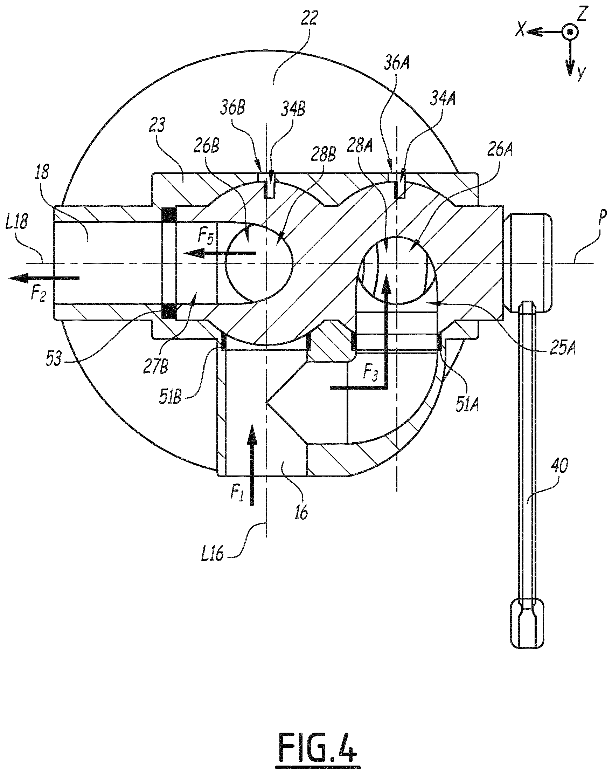

Pour faciliter la navigation d'une figure à l'autre, un repère orthonormé X-Y-Z est représenté sur les figures 2 à 8.

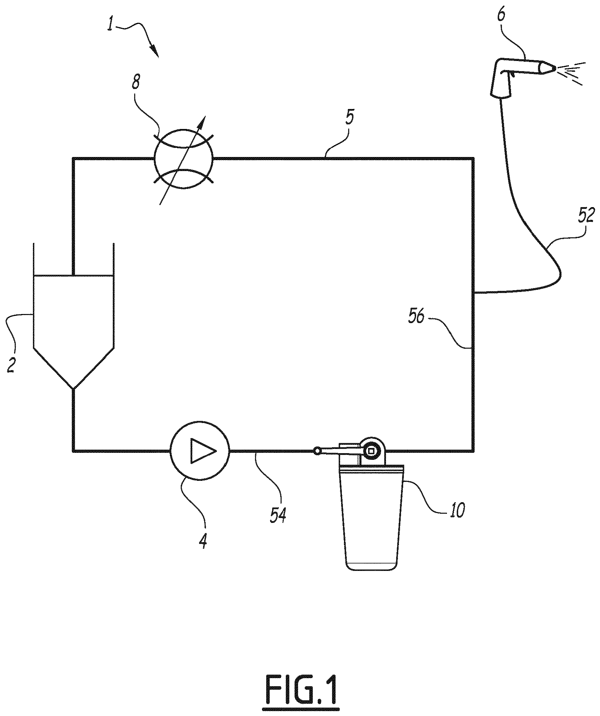

Sur la figure 1 est représentée une installation 1 de pulvérisation de produit liquide comprenant un réservoir 2 de produit liquide, une pompe 4 et un pulvérisateur 6. En pratique, l'installation 1 peut comprendre plusieurs autres pulvérisateurs, qui ne sont pas représentés, pour la clarté du dessin. En option, l'installation 1 comprend de plus un régulateur de pression 8. Le réservoir 2, la pompe 4, le pulvérisateur 6 et, le cas échéant, le limiteur de débit 8 sont reliés par un ensemble 5 de tuyaux destinés à acheminer le produit liquide entre les composants de l'installation.

Le produit liquide est par exemple un produit de revêtement, tel que de la peinture ou du vernis.

Le pulvérisateur 6 peut être de type pneumatique ou « airless », électrostatique ou non. Il peut s'agir d'un pistolet manuel, comme représenté à la figure 1 ou, en variante, d'un pulvérisateur automatique, connu en soi.

L'installation 1 comprend de plus un filtre 10 pour produit liquide, tel que décrit par la suite. Ce filtre est intercalé, dans l'ensemble de tuyaux 5, entre le réservoir 2 et un piquage 52 de cet ensemble 5 dédié à l'alimentation du pulvérisateur 6.

Ici, le filtre 10 est en aval de la pompe 4. Il peut toutefois être disposé en amont de celle-ci.

On note 54 la portion de l'ensemble de tuyaux 5 située immédiatement en amont du filtre 10. On note 56 la portion de cet ensemble située immédiatement en aval de ce filtre. Le filtre 10 est intercalé entre les portions 54 et 56 de l'ensemble de tuyaux 5.

Le filtre 10 est représenté seul aux figures 2 à 8. Ce filtre 10 comprend un godet 12, définissant un volume de réception V12, et un élément filtrant 14 logé dans le volume de réception V12. En pratique, l'élément filtrant 14 est une cartouche filtrante de forme cylindrique rigide ou partiellement rigide. L'élément filtrant 14 comprend, par exemple, un fond 14A rigide en forme de disque et une armature non représentée, tandis qu'une toile 14B de la cartouche cylindrique est composé d'un matériau souple et poreux. Le matériau de la toile 14B peut être naturel ou synthétique, en fonction de la nature du produit liquide à filtrer. Il peut, par exemple, s'agir d'acier inoxydable, de polymère ou de cellulose.

Le godet 12 est réalisé dans un matériau qui tient compte de la nature du produit liquide qui doit traverser l'élément filtrant. Dans l'exemple des figures, où il s'agit d'un produit de revêtement, le godet est en métal, préférentiellement en inox. Il présente, par exemple, une capacité fixe comprise entre un et deux litres.

Le filtre 10 comprend de plus une vanne 20 intégrée dans une tête 22.

Le godet est assemblé de façon réversible avec la tête 22. Par exemple, les composants 12 et 22 peuvent être vissés ensemble, encliquetés ou assemblés par un mécanisme de type baïonnette ou avec des brides.

L'élément filtrant est, quant à lui, rapporté de façon amovible sur la face inférieure 221 de la tête 22, et est maintenu par un système de fixation mécanique, par exemple à vis, clip, etc..

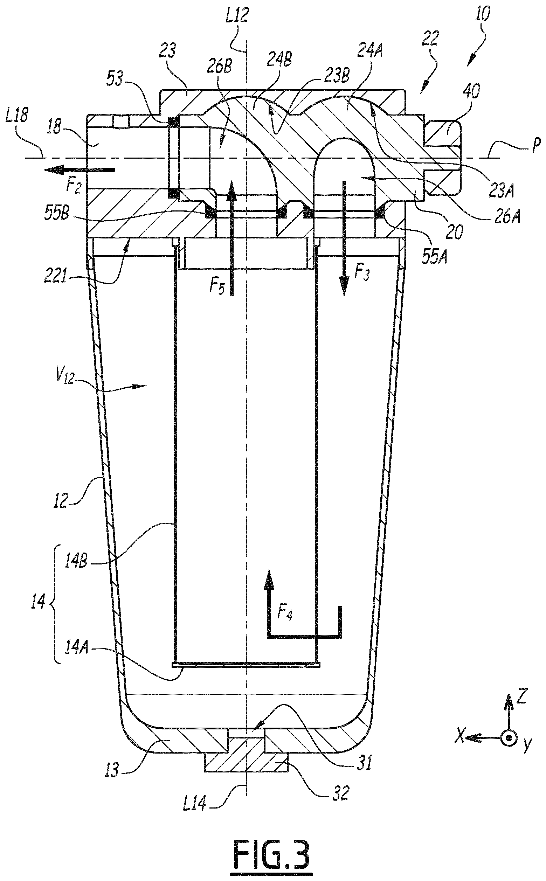

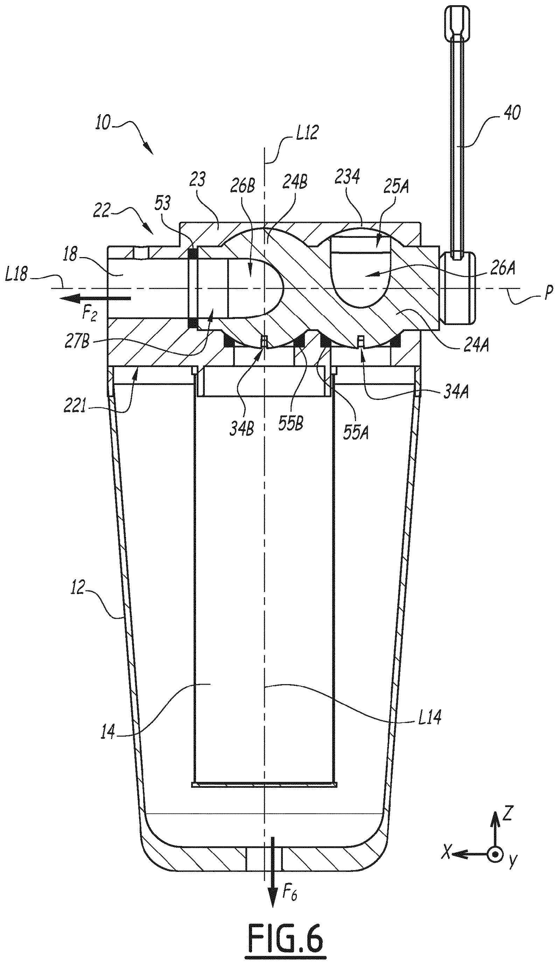

Le godet 12 est à symétrie de révolution autour d'un axe longitudinal L12 du godet 12. L'élément filtrant 14 est à symétrie de révolution autour d'un axe longitudinal L14 de cet élément. Sur les figures 3 et 6, les axes longitudinaux L12 et L14 sont confondus et parallèles à l'axe Z. Les axes longitudinaux L12 et L14 sont compris dans le plan de coupe III de la figure 2.

En variante, l'axe longitudinal L12 du godet 12 et l'axe longitudinal L14 de l'élément filtrant 14 ne sont pas confondus.

Le godet 12 comprend un fond 13 percé d'un orifice de purge 31, préférentiellement coaxial avec l'axe longitudinal L12. Lorsque l'élément filtrant 14 est utilisé pour filtrer le produit liquide, l'orifice 31 est obturé par un bouchon 32 ou un autre élément d'obturation similaire.

Le filtre 10 comprend en outre une tubulure 16 d'admission de produit liquide destinée à être raccordée à la portion 54 et une tubulure 18 d'évacuation de produit liquide destinée à être raccordée à la portion 56. Comme visible à la figure 2, les tubulures 16 et 18 sont à sections cylindriques et les axes longitudinaux L16 et L18 des tubulures 16 et 18 sont respectivement parallèles aux axes Y et X du repère orthonormé. Les axes longitudinaux L16 et L18 des tubulures 16 et 18 sont compris dans le plan de coupe IV de la figure 2.

La vanne 20 comporte au moins un boisseau sphérique. La vanne 20 est mobile en rotation, en faisant pivoter le boisseau sphérique autour d'un axe de pivotement P parallèle à l'axe X, l'axe de pivotement P correspondant à l'intersection entre les plans III et IV de la figure 2. L'axe de pivotement P est défini par le corps 23 de la vanne 20 qui, en pratique, est constitué par une partie de la tête 22.

Dans l'exemple, les axes L18 et P sont confondus. Ceci n'est toutefois pas obligatoire.

Dans le mode de réalisation de l'invention représenté sur les figures et décrit par la suite, la vanne 20 comporte deux boisseaux sphériques 24A et 24B solidaires entre eux. Ici, les boisseaux 24A et 24B sont formés par une pièce monobloc. Chaque boisseau sphérique 24A et 24B est une pièce à enveloppe externe sphérique, partiellement évidée, telle une boule percée par un conduit 26A ou 26B débouchant dans deux orifices distincts et propres à chaque boisseau 24A ou 24B. Les conduits 26A et 26B sont coudés, formant préférentiellement chacun un angle de 90°, et ont des sections circulaires de diamètres sensiblement égaux à ceux des tubulures 16 et 18.

En variante, les diamètres des conduits 26A et 26B sont inférieurs à ceux des tubulures 16 et 18.

En pratique, les conduits coudés 26A et 26B comprennent chacun respectivement deux portions rectilignes 25A, 27A et 25B, 27B et un coude à angle droit respectif 28A et 28B. Ainsi le premier boisseau 24A est traversé par le conduit 26A, formés par les portions rectilignes 25A et 27A reliées entre elles par le coude 28A. En outre, le deuxième boisseau 24B est traversé par le conduit 26B, formés par les portions rectilignes 25B et 27B reliées entre elles par le coude 28B.

Le corps 23 délimite un logement accueillant les boisseaux 24A et 24B de la vanne 20. Le logement est formé de deux cavités sphériques 23A et 23B qui débouchent l'une dans l'autre et accueillant chacune respectivement un boisseau sphérique 24A ou 24B. Les tubulures 16 et 18 sont formées par le corps 23 de la tête 22. La cavité 23A accueillant le premier boisseau sphérique 24A est raccordé fluidiquement à la tubulure d'admission 16 tandis que la cavité 23B accueillant le deuxième boisseau sphérique 24B est raccordée fluidiquement à la tubulure d'évacuation 18.

Le filtre 10 comprend également au moins un orifice d'entrée d'air. En pratique, le filtre 10 comprend ici deux orifices d'entrée d'air 36A et 36 B, ménagés dans une paroi 232 du corps 23, cette paroi étant parallèle au plan formé par les axes X et Z. Les orifices 36A et 36B débouchent respectivement dans les cavités 23A et 23B, chacune en regard d'un boisseau sphérique 24A ou 24B.

En variante, le nombre d'orifices d'entrée d'air et/ou leur emplacement peuvent être différent, à condition qu'ils remplissent leur fonction, décrite ci-après.

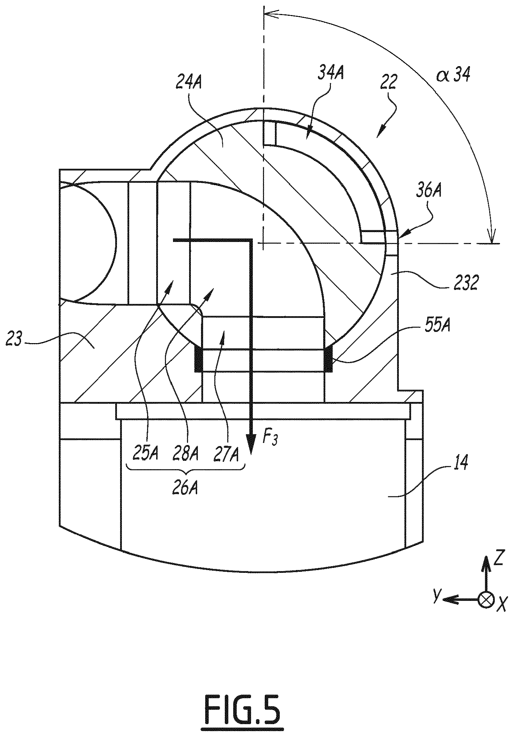

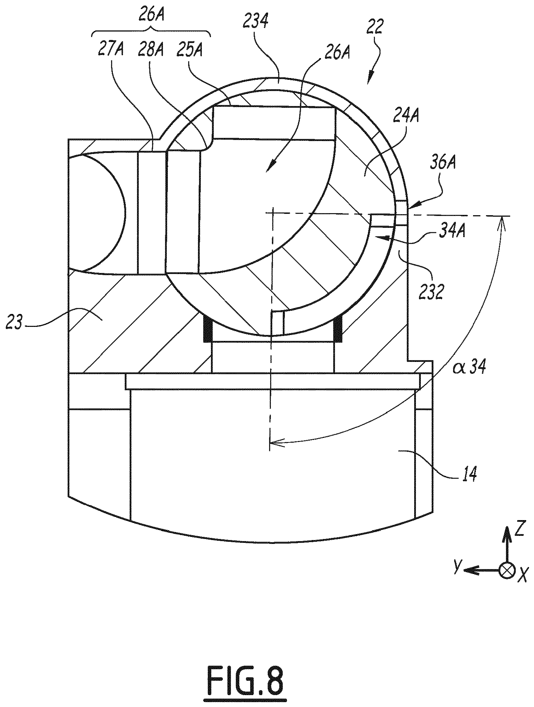

Au moins l'un des boisseaux sphériques 24A ou 24B est pourvu d'une rainure 34A ou 34B pour mettre en communication le volume de réception V12 avec l'orifice d'entrée d'air 36, qui lui est adjacent, lorsque la vanne 20 est dans sa deuxième position, comme visible à la figure 8. Ici chaque boisseau 24A et 24B comprend une rainure qui lui est propre, la rainure 34A du boisseau 24A étant visible aux figures 5 et 8, alors que les deux rainures 34A et 34B sont visibles à la figure 6. Les rainures 34A et 34B creusent sur une faible profondeur les surfaces des boisseaux 24A et 24B, de manière à ne pas déboucher dans les conduits 26A et 26B. Les deux rainures 34 sont identiques ou quasi-identique l'une à l'autre. L'angle α34 défini entre les extrémités d'une rainure 34A et 34B, dans un plan parallèle aux axes Y et Z et autour du centre de la sphère du boisseau 24A ou 24B concerné, est de 90°. Autrement dit, chaque rainure 34A et 34 B s'étend sur 90° à la surface du boisseau 24A ou 24B sur lequel elle est formée sur lequel elle est formée.

Des joints d'étanchéité 51A et 51B sont disposés dans le corps 23 au niveau des jonctions entre la tubulure d'admission 16 et les boisseaux sphériques 24A et 24B. Un joint d'étanchéité 53 est disposé dans le corps 23, au niveau de la jonction entre la tubulure d'évacuation 18 et le boisseau sphérique 24B. Des joints d'étanchéité 55A et 55B sont disposés dans le corps 23 au niveau des jonctions entre le volume V12 et les boisseaux 24A et 24B. Les joints 51A, 51B, 55A et 55B ont une géométrie adaptée au profil sphérique des boisseaux 24A et 24B.

Les joints d'étanchéité sont solidaires du corps 23 de la tête 22 ; ils ne sont donc pas entrainés en rotation lors du pivotement des boisseaux 24A et 24B.

Un organe de commande manuelle, formé ici par une manette 40, est solidaire, en rotation autour de l'axe de pivotement P, du premier boisseau 24A et permet d'actionner la vanne 20.

La vanne 20 est configurée pour prendre sélectivement deux positions distinctes.

Dans sa première position représentée aux figures 1 à 5, la vanne 20 relie la tubulure d'admission 16 au volume de réception V12, à travers le conduit coudé 26A, et ce volume de réception V12 à la tubulure d'évacuation 18, à travers le conduit coudé 26B. Dans sa deuxième position représentée aux figures 6 à 8, la vanne 20 relie directement la tubulure d'admission 16 à la tubulure d'évacuation 18, à travers le conduit coudé 26B. La deuxième position de la vanne 20 permet d'isoler le volume de réception V12 des deux tubulures 16 et 18. Ainsi, lorsque la vanne 20 est dans sa deuxième position, le produit liquide circule entre la tubulure d'admission 16 et la tubulure d'évacuation 18 sans passer ni dans le godet 12 ni à travers l'élément filtrant 14, cette configuration correspond au « by-pass ».

Les flèches F1 et F2 indiquent ici respectivement les directions et le sens du flux entrant dans le filtre 10 par la tubulure d'admission 16 et en sortant par la tubulure d'évacuation 18.

En pratique, une rotation d'amplitude égale à 90°, réalisée par un actionnement manuel de la manette 40, permet à la vanne 20 de basculer de sa première position à sa deuxième position, et réciproquement. Les boisseaux sphériques 24A et 24B étant solidaires entre eux, ils sont pivotés simultanément autour de l'axe de pivotement P lorsque la manette 40 est actionnée.

Dans la première position de la vanne 20, la portion droite 25A est parallèle à l'axe Y et reliée avec la tubulure d'admission 16, la portion droite 27A est parallèle à l'axe Z, permettant ainsi au produit liquide de s'écouler jusque dans le volume V12 du godet 12, en suivant un trajet représenté par les flèches F1 et F3 sur les figures 3 à 5. Le produit traverse ensuite l'élément filtrant 14, comme représenté par la flèche F4 sur la figure 3, puis traverse le deuxième boisseau 24B en suivant la flèche F5 avant d'être évacué par l'orifice 18 suivant la flèche F2. La portion droite 25B est alors parallèle à l'axe Z et la portion droite 27B est parallèle à l'axe X et reliée avec la tubulure d'évacuation 18.

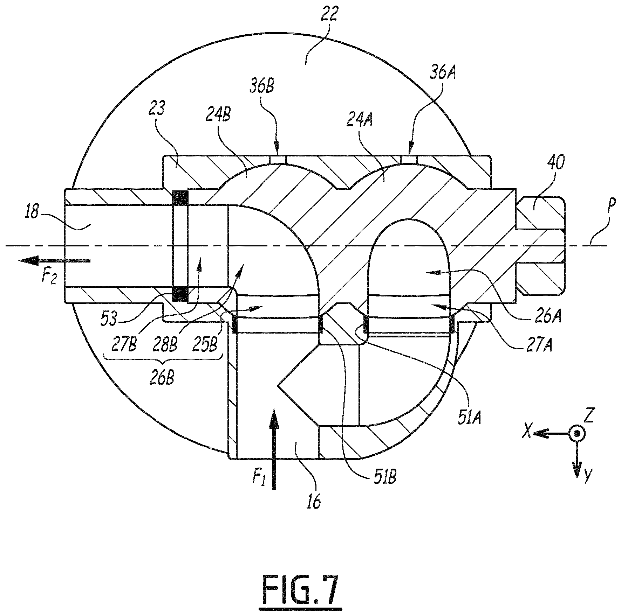

Dans la deuxième position de la vanne, la portion droite 27A est parallèle à l'axe Y et reliée avec la tubulure d'admission 16, la portion droite 25A est parallèle à l'axe Z et disposée en regard d'une paroi 234 formée par le corps 23, sur le côté de la tête 22 opposée au godet 12. Le produit liquide qui se trouve dans le conduit 26A du premier boisseau 24A se heurte à la paroi 234, le conduit 26A forme donc un brin mort, comme visible sur la figure 8. Pour être évacué hors du filtre 10, le produit liquide est contraint de passer directement par le conduit 26B du deuxième boisseau 24B, en suivant les flèches F1 et F2 visibles notamment sur la figure 7. La portion droite 25B est ici parallèle à l'axe Y et reliée avec la tubulure d'admission 16, la portion droite 27B est ici parallèle à l'axe X et reliée avec la tubulure d'évacuation 18.

On note que dans les deux positions de la vanne 20, la portion droite 27B est constamment parallèle à l'axe X.

Avantageusement, la position de la manette 40 indique le degré d'ouverture ou de fermeture du ou des boisseaux interne 24A et 24B à la tête 22. Lorsque la manette est orientée selon l'axe Y, donc parallèle à l'axe L16, la vanne 20 est dans sa première position, le produit liquide passe alors par le conduit 26A, dans le godet 12 et par l'élément filtrant 14, avant d'être évacué par l'orifice 18 par l'intermédiaire du conduit 26B du deuxième boisseau 24B. Lorsque la manette 40 est orientée parallèlement à l'axe Z, donc perpendiculaire à l'axe L16, la vanne 20 est dans sa deuxième position, le produit liquide circule dans le by-pass formé par le conduit coudé 26B.

Dans cette position, les rainures 34A et 34B créent un passage entre les orifices d'entrée d'air 36A et 36B et le volume de réception V12, permettant alors de mettre l'intérieur du godet 12 à pression atmosphérique et de procéder à une purge du filtre 10 à travers l'orifice de purge 31 du fond 13, après avoir retiré le bouchon 32, ce que représente la flèche F6 à la figure 6.

Une fois le godet 12 purgé à travers l'orifice 31 et alors que la vanne 20 demeure dans sa deuxième position, il est possible de désolidariser le godet 12 de la tête 22, en désactivant les moyens de montage réversible qui les assemblent. On peut alors retirer le godet 22 de sous la tête 22 et accéder à l'élément filtrant 14 qui demeure monté sous la tête 12, de façon amovible.

Il est alors possible de retirer l'élément filtrant 14 de la tête 22 et de procéder à son remplacement, au moyen d'un nouvel élément filtrant. Le godet 12 peut alors être remonté sur la tête 12, autour du nouvel élément filtrant.

Après avoir rebouché l'orifice 31 avec le bouton 32, on rebascule la vanne 20 dans sa première position, ce qui rend le filtre 10 à nouveau opérationnel. Ainsi, le changement d'élément filtrant 14 peut avoir lieu rapidement et simplement, sans perturbation majeure du fonctionnement de l'installation 1.

Comme les conduits 26A et 26B sont utilisées dans les deux positions de la vanne 20, ils sont en permanence mouillés par le produit liquide. Il n'y a donc pas de risque que des dépôts se forment dans ces conduits, à la différence d'un tuyau de by-pass utilisé occasionnellement. L'opération de changement de filtre se déroule donc sans faire apparaitre aucune zone de rétention où le produit ne serait pas renouvelé et où il pourrait se détériorer.

Selon une variante non représentée de l'invention, la tubulure d'admission du filtre 10 peut être la tubulure 18, alors que la tubulure d'évacuation est la tubulure 16. C'est par exemple le cas des filtres dits « à poche ». Le sens des flèches F1 à F5 est alors inversé ; les flèches F1 et F2 sont permutées, de même que les flèches F3 et F5.

L'invention n'est pas limitée au cas où le produit liquide est un produit de revêtement. Le filtre 10 peut être utilisé notamment pour filtrer une huile, par exemple pour un moteur, un produit de nettoyage, de l'eau en sortie d'un puits, ou un produit plus visqueux de type colle, pâte, mastic d'étanchéité, anti-gravillon ou insonorisant.

Alternativement, la vanne 20 est motorisée, notamment afin d'être télécommandée ou robotisée, ce qui permet d'actionner la vanne à distance.

En variante, les boisseaux 24A et 24B sont des boisseaux cylindriques.

Selon une variante non représentée de l'invention, la vanne 20 comporte un seul boisseau cylindrique ou sphérique, lequel est alors avantageusement multicanaux.

Toute caractéristique de l'un des modes de réalisation ou variante décrite cidessus, peut être mise en oeuvre dans les autres modes de réalisation et variantes décrits.

## Revendications

1. Filtre (10) pour produit liquide ou visqueux, ce filtre comprenant un élément filtrant (14) et un godet (12) définissant un volume de réception (V12) accueillant l'élément filtrant, le filtre (10) comprenant une tubulure d'admission (16) de produit liquide ou visqueux et une tubulure d'évacuation (18) de produit liquide ou visqueux, le filtre (10) comprenant une vanne (20) configurée pour prendre :
- une première position où la vanne (20) relie la tubulure d'admission (16) au volume de réception (V12) et ce volume de réception (V12) à la tubulure d'évacuation (18) ; et
- une deuxième position où la vanne (20) relie la tubulure d'admission (16) à la tubulure d'évacuation (18) et isole le volume de réception (V12) par rapport aux deux tubulures (16, 18)
**caractérisé en ce que** la vanne (20) comporte deux boisseaux cylindriques ou sphériques (24A, 24B), dont un premier boisseau cylindrique ou sphérique (24A) comprenant un premier conduit (26A) qui relie la tubulure d'admission (16) au volume de réception (V12), lorsque la vanne (20) est dans sa première position, et qui forme un brin mort, lorsque la vanne (20) est dans sa deuxième position, et un deuxième boisseau cylindrique ou sphérique (24B) comprenant un deuxième conduit (26B) qui relie le volume de réception (V12) à la tubulure d'évacuation (18), lorsque la vanne (20) est dans sa première position, et qui relie la tubulure d'admission (16) à la tubulure d'évacuation (18), lorsque la vanne (20) est dans sa deuxième position.

2. Filtre selon la revendication précédente **caractérisé en ce que** le filtre (10) comprend au moins un orifice d'entrée d'air (36A, 36B) et un orifice de purge (31).

3. Filtre selon la revendication 2 **caractérisé en ce qu'**au moins un boisseau sphérique (24A, 24B) comporte une rainure (34A, 34B) pour mettre en communication le volume de réception (V12) avec l'orifice d'entrée d'air (36A, 36B) lorsque la vanne (20) est dans sa deuxième position.

4. Filtre selon l'une quelconque des revendications précédentes, **caractérisé en ce qu'**il comprend un organe (40) de commande manuelle de la position de la vanne (20).

5. Filtre selon l'une quelconque des revendications précédentes **caractérisé en ce que** la vanne (20) est mobile entre sa première position et sa deuxième position, et réciproquement, par une rotation dont l'amplitude est de préférence égale à 90°, autour d'un axe de pivotement (P) défini par un corps (23) de la vanne.

6. Filtre selon l'une quelconque des revendications précédentes **caractérisé en ce que** la vanne (20) est intégrée dans une tête (22) montée de façon amovible sur le godet (12).

7. Filtre selon la revendication précédente **caractérisée en ce que** l'élément filtrant (14) est une cartouche de forme cylindrique montée de façon amovible sur la tête (22).

8. Installation de pulvérisation comprenant un réservoir (2) de produit liquide ou visqueux, une pompe (4) et un pulvérisateur (6) **caractérisée en ce que** l'installation (1) comprend un filtre (10) pour produit liquide ou visqueux selon l'une quelconque des revendications précédentes.

## Patentansprüche

1. Filter (10) für flüssiges oder viskoses Produkt, dieser Filter umfassend ein Filterelement (14) und einen Becher (12), der ein Aufnahmevolumen (V12) definiert, das das Filterelement aufnimmt, der Filter (10) umfassend einen Einlassstutzen (16) für flüssiges oder viskoses Produkt und einen Auslassstutzen (18) für flüssiges oder viskoses Produkt, der Filter (10) umfassend ein Ventil (20), das konfiguriert ist, um Folgendes einzunehmen:
- eine erste Position, in der das Ventil (20) den Einlassstutzen (16) mit dem Aufnahmevolumen (V12) und dieses Aufnahmevolumen (V12) mit dem Auslassstutzen (18) verbindet; und
- eine zweite Position, in der das Ventil (20) den Einlassverteiler (16) mit dem Auslassverteiler (18) verbindet und das Aufnahmevolumen (V12) in Bezug auf die zwei Stutzen (16, 18) trennt
**dadurch gekennzeichnet, dass** das Ventil (20) zwei zylindrische oder kugelförmige Stopfen (24A, 24B) umfasst, wovon ein erster zylindrischer oder kugelförmiger Stopfen (24A) eine erste Leitung (26A) umfasst, die den Einlassstutzen (16) mit dem Aufnahmevolumen (V12) verbindet, wenn das Ventil (20) in seiner ersten Position ist, und die ein totes Stück bildet, wenn das Ventil (20) in seiner zweiten Position ist, und einen zweiten zylindrischen oder kugelförmigen Stopfen (24B), der eine zweite Leitung (26B) umfasst, die das Aufnahmevolumen (V12) mit dem Auslassstutzen (18) verbindet, wenn das Ventil (20) in seiner ersten Position ist, und der den Einlassstutzen (16) mit der Auslassleitung (18) verbindet, wenn das Ventil (20) in seiner zweiten Position ist.

2. Filter nach dem vorherigen Anspruch, **dadurch gekennzeichnet, dass** der Filter (10) mindestens eine Lufteinlassöffnung (36A, 36B) und eine Entlüftungsöffnung (31) umfasst.

3. Filter nach Anspruch 2, **dadurch gekennzeichnet, dass** mindestens ein kugelförmiger Stopfen (24A, 24B) eine Nut (34A, 34B) aufweist, um das Aufnahmevolumen (V12) mit der Lufteinlassöffnung (36A, 36B) in Kommunikation zu bringen, wenn das Ventil (20) in seiner zweiten Position ist.

4. Filter nach einem der vorherigen Ansprüche, **dadurch gekennzeichnet, dass** er ein Element (40) zur manuellen Steuerung der Position des Ventils (20) umfasst.

5. Filter nach einem der vorherigen Ansprüche, **dadurch gekennzeichnet, dass** das Ventil (20) zwischen seiner ersten Position und seiner zweiten Position und umgekehrt durch eine Drehung, deren Amplitude vorzugsweise gleich 90° ist, um eine Schwenkachse (P), die durch einen Körper (23) des Ventils definiert ist, beweglich ist.

6. Filter nach einem der vorherigen Ansprüche, **dadurch gekennzeichnet, dass** das Ventil (20) in einen Kopf (22) integriert ist, der abnehmbar an dem Becher (12) montiert ist.

7. Filter nach dem vorherigen Anspruch, **dadurch gekennzeichnet, dass** das Filterelement (14) eine zylindrische Patrone ist, die abnehmbar auf dem Kopf (22) montiert ist.

8. Sprühanlage mit einem Behälter (2), für ein flüssiges oder viskoses Produkt, eine Pumpe (4) und einer Sprühvorrichtung (6) umfasst, **dadurch gekennzeichnet, dass** die Anlage (1) einen Filter (10) für ein flüssiges oder viskoses Produkt nach einem der vorherigen Ansprüche umfasst.

## Claims

1. A filter (10) for a liquid or viscous product, this filter comprising a filtering element (14) and a bucket (12) defining a receiving volume (V12) accommodating the filtering element, the filter (10) comprising a liquid or viscous product intake tubing (16) and a liquid or viscous product discharge tubing (18), the filter (10) comprising a valve (20) configured to assume:
a first position where the valve (20) couples the intake tubing (16) to the receiving volume (V12) and this receiving volume (V12) to the discharge tubing (18); and
a second position where the valve (20) couples the intake tubing (16) to the discharge tubing (18) and isolates the receiving volume (V12) relative to the two tubings (16, 18)
**characterized in that** the valve (20) includes two cylindrical or spherical sliding gates (24A, 24B), including a first cylindrical or spherical sliding gate (24A) including a first duct (26A) which couples the intake tubing (16) to the receiving volume (V12), when the valve (20) is in its first position, and which forms a dead line, when the valve (20) is in its second position, and a second cylindrical or spherical sliding gate (24B) including a second duct (26B) which couples the receiving volume (V12) to the discharge tubing (18), when the valve is (20) in its second position, and which couples the intake tubing (16) to the discharge tubing (18), when the valve (20) is in its second position.

2. The filter according to the preceding claim, **characterized in that** the filter (10) comprises at least one air intake orifice (36A, 36B) and one purge orifice (31).

3. The filter according to claim 2, **characterized in that** at least one spherical sliding gate (24A, 24B) includes a slot (34A, 34B) for placing the receiving volume (V12) in communication with the one air intake orifice (36A, 36B) when the valve (20) is in its second position.

4. The filter according to any one of the preceding claims, **characterized in that** it comprises a member (40) for manually controlling the position of the valve (20).

5. The filter according to any one of the preceding claims, **characterized in that** the valve (20) is movable between its first position and its second position, and reciprocally, by a rotation, the amplitude of which is preferably equal to 90°, around a pivot axis (P) defined by a body (23) of the valve.

6. The filter according to any one of the preceding claims, **characterized in that** the valve (20) is integrated into a head (22) mounted removably on the bucket (12).

7. The filter according to the preceding claim, **characterized in that** the filtering element (14) is a cylindrical cartridge mounted removably on the head (22).

8. A spraying installation comprising a tank (2) of liquid or viscous product, a pump (4) and a sprayer (6), **characterized in that** the installation (1) comprises a filter (10) for liquid or viscous product according to any one of the preceding claims.
